# EUROPÄISCHE PATENTSCHRIFT

(11) **EP 1 796 921 B1**
(45) Veröffentlichungstag und Bekanntmachung des Hinweises auf die Patenterteilung: **22.04.2009**
(21) Anmeldenummer: 05786918.2
(22) Anmeldetag: 03.09.2005
(51) Int. Cl.: B60B 3/10, B60B 5/02, B60B 1/08

(54) **LEICHTBAUFELGE FÜR EIN KRAFTFAHRZEUG MIT EINEM TRAGENDEN SPEICHENAUFBAU**
LIGHTWEIGHT RIM FOR A MOTOR VEHICLE WITH A SUPPORTING SPOKE CONSTRUCTION
JANTE LEGERE POUR VEHICULE A MOTEUR COMPRENANT UNE CONSTRUCTION DE RAYONS DE SUPPORT

(30) Priorität: 09.10.2004 DE 202004015816 U
(43) Veröffentlichungstag der Anmeldung: 20.06.2007
(73) Patentinhaber: Stiftung Alfred-Wegener-Insitut für Polar- und Meeresforschung, 27570 Bremerhaven (DE)
(72) Erfinder: HAMM, Christian, 27580 Bremerhaven (DE)
(86) Internationale Anmeldenummer: PCT/DE2005/001543
(87) Internationale Veröffentlichungsnummer: WO 2006/039878

(56) Entgegenhaltungen:
- WO-A-20/05052818
- US-A- 1 479 066
- US-A- 3 884 527

## Beschreibung

Die Erfindung betrifft eine Leichtbaufelge für ein Kraftfahrzeug mit einem einseitig an einer Achse befestigten inneren Felgenkörper und mit einem damit verbundenen äußeren Felgenbett, wobei der Felgenkörper einen tragenden Speichenaufbau aufweist.

### Stand der Technik

Leichtbaufelgen für Kraftfahrzeuge lösen in steigendem Maße Stahlfelgen ab, nicht zuletzt wegen ihres eleganten Erscheinungsbildes. Dieses wird aber wesentlich durch die Konstruktion der Felge bestimmt: Zur Erzielung der notwendigen Festigkeit wird der Felgenkörper verhältnismäßig dickwandig und schwer ausgeführt, wodurch sich das hohe Gewicht besonders bei Sportwagen unangenehm bemerkbar macht. Eine Gewichtsreduzierung ist insbesondere deshalb gewünscht, weil Felgen als ungefederte Massen möglichst leicht sein müssen, um besonderen Bodenkontakt zu halten und auch auf unebener Fahrbahn effektiv zu haften. Eine besondere Herausforderung ist auch das Material der Leichtbaufelge, dessen Eigenschaften Einfluss auf die Auswahl geeigneter Geometrien hat. Dabei sind Verbesserungen vor allem im Bereich des Felgenkörpers, insbesondere durch die Ausprägung von Speichen, zu erzielen. Als zusätzliche Forderung ist hier jedoch eine gute Luftdurchlässigkeit des Felgenkörpers zu nennen, um eine effektive Kühlung von Scheibenbremsen zu ermöglichen.

Aus dem Stand der Technik sind Leichtbaufelgen in der Ausführung als Leichtmetallfelgen in unterschiedlichsten Konstruktions- und Designformen bekannt. Klassische Drahtspeichenfelgen, wie sie insbesondere Anfang des 20. Jahrhunderts im Luxussegment des Automobilbaus eingesetzt wurden, sind formschön, aber sehr teuer und aufwändig bei der Herstellung und im Unterhalt, da die zahlreichen Speichen einzeln unter definierter Zugspannung stehen müssen. Speichen kommen in der Regel auch bei gepressten Stahl - und Alufelgen vor. Dabei sind Leichtmetallfelgen mit einem tragenden Speichenaufbau, d.h. mit konkret als Speichen ausgeformten Elementen im Felgenkörper, von solchen mit einem nichttragenden Speichenaufbau, bei dem der Felgenkörper aus einer Scheibe mit einem Speichenrelief besteht, zu unterscheiden. Aus der DE 198 21 168 A1 ist beispielsweise eine Leichtmetallfelge mit fünf konkret ausgeformten und die Lauflast aufnehmenden Speichen bekannt, von der die vorliegende Erfindung als nächstliegendem Stand der Technik ausgeht. Die einzelnen Speichen sind relativ breit und bringen dadurch immer noch einen hohen Gewichtsanteil ein. Sie zeigen keinen eigentlichen Speichencharakter und erzeugen keinen hochsymmetrischen Gesamteindruck. Insgesamt zeigt die bekannte Leichtmetallfelge aber eine hohe Festigkeit und Stabilität. Aus der DE 6 81 06 289 U1 ist eine nichttragende Zierfelge zum Vorsatz vor eine einfache Autofelge bekannt, die aus einer Vielzahl von konkret ausgeformten Speichen besteht, aber als Vorsatz keinen Beitrag zur Festigkeit der Felge leistet. Diese Zierfelge lehnt aber eng an die bekannten tragenden Speichenfelgen der ersten Automobile an und hat ein sehr elegantes Erscheinungsbild.

Die US 1 479 066 offenbart den Oberbegriff des Anspruchs 1.

### Aufgabenstellung

Die **Aufgabe** für die vorliegende Erfindung ist daher darin zu sehen, eine Leichtbaufelge mit einem tragenden Speichenaufbau der eingangs genannten Art anzugeben, die in optimaler Weise ein geringes Gewicht mit einer hohen Festigkeit und darüber hinaus noch mit einem besonders ansprechenden optischen Gesamteindruck kombiniert. Als **Lösung** für diese Aufgabe ist die vorliegende Erfindung gekennzeichnet durch eine hochsymmetrische Ausprägung des Speichenaufbaus aus mehreren rippenartigen Radialspeichen mit einem hohen Aspektverhältnis von Breite zu Tiefe und mehreren konzentrischen rippenartigen Ringspeichen, wobei nicht alle Radialspeichen bis zur Felgenachse durchlaufen, sondern sich einige radiale Radialspeichen nur jeweils über ein Drittel des Felgenkörpers vom Felgenbett her erstrecken und an einer Ringspeiche enden.

Die Leichtbaufelge nach der Erfindung zeichnet sich durch einen hochsymmetrischen und besonders filigranen Aufbau aus, der einen geringen Material-einsatz ermöglicht und trotzdem durch den hohen Vernetzungsgrad eine hohe Festigkeit garantiert. Im Speichenaufbau werden Radial- und Ringspeichen unterschieden. Dabei sind die Speichen rippenartig ausgeformt, sodass sie von der Felgenvorderseite her betrachtet nur einen geringen Raum einnehmen und eine optimale Belüftung der hinter der Leichtbaufelge liegenden Bremsen, insbesondere Scheibenbremsen, ermöglichen. Die Radialfelgen haben ein hohes Aspektverhältnis in der Breite der Rippen zu ihrer Tiefe. Die Form der Rippe ist damit schmal, aber tief, wodurch sich bereits ein Festigkeitsaspekt ergibt. Der zweite Festigkeitsaspekt ergibt sich aus der kreuzenden Überlagerung der Radialspeichen mit den Ringspeichen, sodass sich alle Speichen gegenseitig abstützen. Es entsteht in Abhängigkeit von der Anzahl der Speichen ein hochsymmetrischer Gesamteindruck der Felge nach der Art eines karierten Papiers mit einem durch die gewählte Rippengeometrie festlegbaren Maschenbild. Dabei wird dieses insbesondere auch dadurch geprägt, dass nicht alle Radialspeichen bis zur Felgenachse durchlaufen, sondern sich einige radiale Radialspeichen nur jeweils über ein Drittel des Felgenkörpers vom Felgenbett her erstrecken. Diese enden dann gemeinsam an einer der äußeren Ringspeichen. Diese Maßnahme, die sich auf symmetrisch angeordnete Radialspeichen, beispielsweise jede dritte Radialspeiche, bezieht, erbringt eine weitere Verringerung des Felgengewichts, ohne dass die Felge dabei an Festigkeit einbüßt. Das Erscheinungsbild des Speichenaufbaus wird aufgelockert, ohne dass dabei jedoch eine Unruhe entsteht.

Der Speichenaufbau kann völlig symmetrisch sein, wenn die Radial- und die Ringspeichen gleichberechtigt ausgeprägt sind. Eine Ausführungsform der Erfindung kann aber auch durch ein geringeres Aspektverhältnis der Ringspeichen gegenüber dem Aspektverhältnis der Radialspeichen gekennzeichnet sein, wobei die Ringspeichen mit den Radialspeichen auf der Felgenvorderseite bündig oder nahezu bündig verlaufen. Somit ergibt sich ein spaltendominierter Speichenaufbau, der eine besonders hohe radiale Festigkeit aufweist, trotzdem aber auch umlaufend ausreichend unterstützt ist. Dabei wird der optische Gesamteindruck nicht gestört, wenn die flacheren Ringspeichen an der Vorderseite des Felgenkörpers angeordnet sind, sodass sie bündig oder nahezu bündig mit den Radialspeichen verlaufen und nicht nach hinten versetzt sind.

Theoretische und praktische Untersuchungen haben eine besonders vorteilhafte Ausführungsform der beanspruchten Leichtbaufelge ergeben, die durch 16 Radialspeichen und 6 Ringspeichen gekennzeichnet ist, wobei jede zweite Radialspeiche nur bis zur zweiten Ringspeiche vom Felgenbett aus verläuft. Das sich hierbei ergebende Erscheinungsbild der Leichtbaufelge ähnelt dem der Kieselalgenart *Arachnoidiscus.* Kieselalgen haben bekanntermaßen eine ungeheure Vielfalt im Aufbau ihres Silikatskeletts entwickelt. Dabei ist die Ähnlichkeit keine Zufälligkeit, sondern beruht auf der Tatsache, dass die vorliegende Erfindung als vom Anmelder durchgeführte Anwendung des Verfahrens zur Ermittlung von konstruktiven Erstmodelldaten für eine technische Leichtbaustruktur entstanden ist, siehe die Offenlegungsschrift DE 103 56 682 A1 mit Anmeldetag vom 30.11.2003 vom Anmelder. Mit diesem Verfahren können verschiedenste Geometrien aus der Natur auf Gebrauchsgegenstände aller Art und Größe des täglichen Lebens einfach übertragen und angepasst werden.

Weitere Modifikationen der Leichtbaufelge nach der Erfindung sind gekennzeichnet durch Abrundungen zwischen den Radialspeichen auf der Seite des Felgenbettes und durch eine konzentrische Kreisplatte im Bereich der Achsbefestigung des Felgenkörpers, in die die Radialspeichen auslaufen. Derartige Modifikationen dienen der weiteren Steigerung der Felgenfestigkeit und können beispielsweise durch Belastungssimulationsprogramme ermittelt werden. Außerdem verbessern sie den optischen Gesamteindruck und die Handhabbarkeit der Leichtbaufelge. Durch die Abrundung der Zwischenräume ist eine bessere Säuberung und durch die konzentrische Kreisplatte eine bessere Montage gewährleistet.

Die Leichtbaufelge nach der Erfindung kann, wie bekannte Felgen, aus einem Leichtmetall, beispielsweise Aluminium, hergestellt sein. Der besonders ergonomische Aufbau der Leichtbaufelge ermöglicht aber auch den Einsatz von faserverstärkten Kunststoffen, wodurch völlig neue Wege im Felgenbau für die Automobilindustrie beschritten werden können. Insbesondere bietet sich der Einsatz von einem faserverstärkten Kunststoff mit anisotropen Materialeigenschaften an. Durch die nach dem unter besonderen Stabilitätskriterien ausgesuchten Vorbild der Natur konzipierte Konstruktionsform ist eine optimale Spannungsverteilung bei maximaler Festigkeit gewährleistet. Wie in der Natur können die Faserverstärkungen entlang der auftretenden Spannungsverläufe eingebracht werden. Dieses Vorgehen kann durch Anwendung numerischer Simulationsprozesse unter Spannungsbedingungen und durch optische Spannungsaufnahmen am Modell noch optimiert werden. Die Materialeigenschaften des Kunststoffs können also nach dem Verlauf der Spannungsbelastungen anisotrop ausgelegt werden. In Richtung der tragenden Radialspeichen beispielsweise wird eine besonders hohe Festigkeit gefordert, die bei den versteifenden Ringspeichen nicht ganz so kritisch ist. Entsprechend können die Faserverstärkungen eingebracht werden. Durch die Verwendung von Kunststoff ergeben sich besonders einfache und kostengünstige Herstellungsverfahren, die eine besondere Formenvielfalt bis in das Detail ermöglichen. Eine weitere bedeutsame Gewichtsreduzierung ist möglich, ohne dabei auf Festigkeit verzichten zu müssen. Durch geeignete Oberflächenbehandlungsverfahren, beispielsweise durch Beschichten mit einem Lotuseffektlack, kann eine schmutzabweisende Oberfläche und damit eine leichte Reinigung des relativ komplexen Speichenaufbaus ermöglicht werden. Durch andere Verfahren, beispielsweise elektrochemisches Verchromen, kann bei Verwendung eines Kunststoffs trotzdem der Eindruck einer Leichtmetallfelge erhalten bleiben.

### Ausführungsbeispiel

**Ausbildungsformen** der beanspruchten Leichtbaufelge werden nachfolgend anhand der schematischen Figuren näher erläutert. Dabei zeigt:
- **Figur 1**: eine frontale Vorderansicht mit einem Ausschnitt,
- **Figur 2**: eine perspektivische Rückansicht mit einem Ausschnitt und
- **Figur 3**: eine perspektivische Seitenansicht.

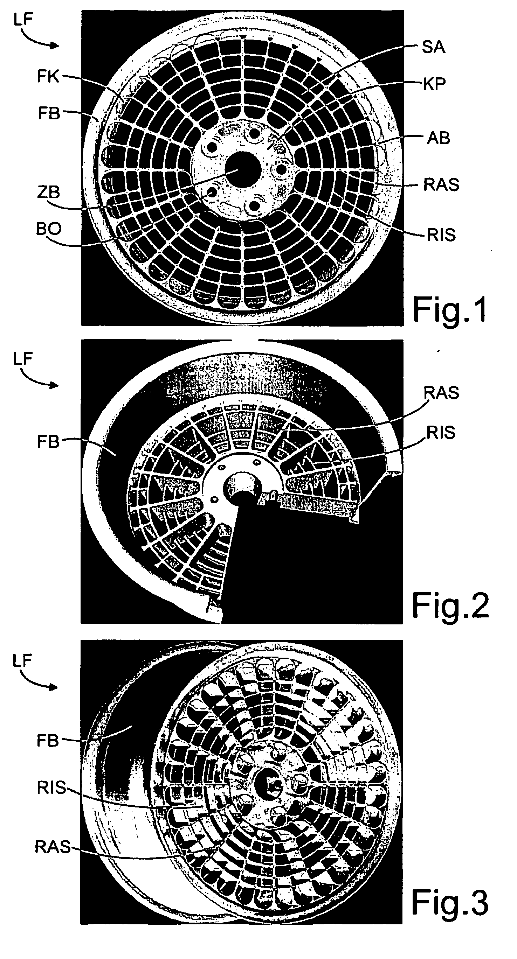

Die **Figur 1** zeigt eine Leichtbaufelge **LF** für ein Kraftfahrzeug mit einem inneren Felgenkörper **FK** und einem damit verbundenen äußeren Felgenbett **FB.** Dabei kann die Leichtbaufelge **LF** bevorzugt aus einem faserverstärkten Kunststoff mit anisotropen Materialeigenschaften bestehen. Auf das Felgenbett **FB** wird im Betrieb ein Reifen aufgezogen, der Felgenkörper **FK** weist eine zentrale Bohrung **ZB** auf, mit der er einseitig auf die Autoachse aufgeschoben und mit mehreren Radbolzen durch dafür vorgesehen Bohrungen **BO** befestigt. Der Felgenkörper **FK** weist einen tragenden Speichenaufbau **SA** auf.

Der Speichenaufbau **SA** ist hochsymmetrisch ausgeprägt und besteht aus einer Vielzahl von Radialspeichen **RAS** und Ringspeichen **RIS.** Beide Speichenformen sind als rechteckige Rippen ausgebildet und sind relativ schmal, aber lang und tief. Die rippenartigen Radialspeichen **RAS** haben ein besonders hohes Aspektverhältnis. Sie sind sehr schmal ausgebildet und haben eine solche Tiefe, dass eine für den Betrieb ausreichende Festigkeit und Stabilität der Leichtbaufelge **LF** erreicht werden kann. Die Tiefe der Radialspeichen **RAS** kann beispielsweise im Bereich von einem Sechstel der Breite des Felgenbetts **FB** liegen.

Gekreuzt werden die Radialspeichen **RAS** von mehreren konzentrischen Ringspeichen **RIS.** Diese sind umlaufend geschlossen und in einem konstanten radialen Abstand zueinander angeordnet. Im gewählten Ausführungsbeispiel werden 16 Radialspeichen **RAS** von 6 Ringspeichen gekreuzt. Es entsteht ein engmaschiges Gitter hoher Stabilität. Die Ringspeichen weisen ein geringeres Aspektverhältnis auf als die Radialspeichen **RAS** und dienen in der Hauptsache zu deren Aussteifung. Um ein von der Vorderseite der Leichtbaufelge **LF** her einheitliches Bild zu schaffen, liegen die Ringspeichen **RIS** an der Vorderseite des Felgenbetts **FB** und schließen bündig mit den Radialspeichen **RAS** ab.

Die Hauptlast wird von den Radialspeichen **RAS** getragen. Dabei ist jedoch eine Durchgängigkeit aller Radialspeichen **RAS** bis zur zentralen Bohrung **ZB** nicht erforderlich. Es reicht eine maximale Aussteifung im Bereich des Felgenbettes **FB** aus, weshalb im gewählten Ausführungsbeispiel jede zweite Radialspeiche **RAS** nur bis zur zweiten Ringspeiche **RIS** vom Felgenbett **FB** aus ausgeführt ist. Dadurch ergibt sich zusätzlich noch ein sehr symmetrischer Eindruck eines Felgenkranzes. Dieser wird noch unterstützt durch Abrundungen **AB** zwischen den Radialspeichen **RAS** auf der Seite des Felgenbettes **FB.** Weiterhin ist im Bereich der Achsbefestigung des Felgenkörpers **FK** eine konzentrische Kreisplatte **KP** vorgesehen, in die die Radialspeichen **RAS** auslaufen und die das Gittermuster harmonisch abschließt. Die konzentrische Kreisplatte **KP** nimmt die Bohrungen **BO** für die Radbolzen auf und garantiert eine hohe Stabilität des belasteten Achsbereichs der Leichtbaufelge **LF.**

Die **Figuren 2** und **3** zeigen das Ausführungsbeispiel einer Leichtbaufelge **LF** gemäß **Figur 1** in der Ansicht von hinten mit einem Ausschnitt und von der Seite. Die Bezugszeichen sind entsprechend der **Figur 1** zu entnehmen. In der **Figur 2** ist zu erkennen, dass die Radialspeichen **RAS** und die Ringspeichen **RIS** nur an der vorderen Seite des Felgenbettes **FB** angeordnet sind. Zu erkennen ist auch das gegenüber den Ringspeichen **RIS** höhere Aspektverhältnis bei den Radialspeichen **RAS.** In der **Figur 3** sind deutlich die stabile Ausprägung des Felgenbettes **FB** und die rippenartige Ausprägung der Ringspeichen **RIS** zu erkennen.

### Bezugszeichenliste

- **AB**: Abrundung
- **BO**: Bohrung
- **FB**: Felgenbett
- **FK**: Felgenkörper
- **KP**: Kreisplatte
- **LF**: Leichtbaufelge
- **RAS**: Radialspeiche
- **RIS**: Ringspeiche
- **SA**: Speichenaufbau
- **ZB**: zentrale Bohrung

## Patentansprüche

1. Leichtbaufelge (LF) für ein Kraftfahrzeug mit einem einseitig an einer Achse befestigten inneren Felgenkörper (FK) und mit einem damit verbundenen äußeren Felgenbett (FB), wobei der Felgenkörper (FK) einen tragenden Speichenaufbau (SA) aufweist,
**gekennzeichnet durch** eine hochsymmetrische Ausprägung des Speichenaufbaus (SA) aus mehreren rippenartigen Radialspeichen (RAS) mit einem hohen Aspektverhältnis von Breite zu Tiefe und mehreren konzentrischen rippenartigen Ringspeichen (RIS), wobei nicht alle Radialspeichen bis zur Felgenachse durchlaufen, sondern sich einige radiale Radialspeichen (RAS) nur jeweils über ein Drittel des Felgenkörpers (FB) vom Felgenbett (FB) her erstrecken und an einer Ringspeiche (RIS) enden.

2. Leichtbaufelge (LF) nach Anspruch 1,
**gekennzeichnet durch** ein geringeres Aspektverhältnis der Ringspeichen (RIS) gegenüber dem Aspektverhältnis der Radialspeichen (RAS), wobei die Ringspeichen (RIS) mit den Radialspeichen (RAS) auf der Felgenvorderseite bündig oder nahezu bündig verlaufen.

3. Leichtbaufelge (LF) nach Anspruch 1 oder 2,
**gekennzeichnet durch**
16 Radialspeichen (RAS) und 6 Ringspeichen (RIS), wobei jede zweite Radialspeiche (RAS) nur bis zur zweiten Ringspeiche (RIS) vom Felgenbett (FB) aus verläuft.

4. Leichtbaufelge (LF) nach einem der Ansprüche 1 bis 3,
**gekennzeichnet durch** Abrundungen (AB) zwischen den Radialspeichen (RAS) auf der Seite des Felgenbettes (FB).

5. Leichtbaufelge (LF) nach einem der Ansprüche 1 bis 4,
**gekennzeichnet durch** eine konzentrische Kreisplatte (KP) im Bereich der Achsbefestigung des Felgenkörpers (FK), in die die Radialspeichen (RAS) auslaufen.

6. Leichtbaufelge (LF) nach einem der Ansprüche 1 bis 5,
**gekennzeichnet durch** einen Aufbau aus einem Kunststoffmaterial.

7. Leichtbaufelge (LF) nach Anspruch 6,
**gekennzeichnet durch** einen Aufbau aus einem faserverstärkten Kunststoff mit anisotropen Materialeigenschaften.

## Claims

1. A lightweight rim (LF) for a vehicle with an inner rim body (FK) fixed on one side to an axle and with an outer rim well (FB) connected thereto, wherein the rim body (FK) has a supporting spoked construction (SA),
**characterized by** a highly symmetrical shaping of the spoked construction (SA) made from a plurality of rib-like radial spokes (RAS) with a high aspect ratio of width to depth and a plurality of concentric rib-like ring spokes (RIS), wherein not all radial spokes pass through as far as the rim axle, rather several radial radial spokes (RAS) only extend over a third of the rim body (FK) from the rim well (FB) in each case and end at a ring spoke (RIS).

2. The lightweight rim (LF) according to Claim 1,
**characterized by** a lower aspect ratio of the ring spokes (RIS) compared to the aspect ratio of the radial spokes (RAS), wherein the ring spokes (RIS) run flush or almost flush with the radial spokes (RAS) on the rim front.

3. The lightweight rim (LF) according to Claim 1 or 2,
**characterized by** 16 radial spokes (RAS) and 6 ring spokes (RIS), wherein every second radial spoke (RAS) only runs as far as the second ring spoke (RIS) from the rim well (FB).

4. The lightweight rim (LF) according to one of Claims 1 to 3,
**characterized by** roundings (AB) between the radial spokes (RAS) on the side of the rim well (FB).

5. The lightweight rim (LF) according to one of Claims 1 to 4,
**characterized by** a concentric circular plate (KP) in the region of the axle fixing of the rim body (FK), in which the radial spokes end.

6. The lightweight rim (LF) according to one of Claims 1 to 5,
**characterized by** a construction made from plastic material.

7. The lightweight rim (LF) according to Claim 6,
**characterized by** a construction made from a fibre-reinforced plastic with anisotropic material properties.

## Revendications

1. Jante en alliage léger (LF) pour un véhicule automobile comprenant un corps de jante (FK) intérieur fixé d'un côté sur un essieu et une base de jante (FB) extérieure reliée au corps de jante, le corps de jante (FK) présentant une structure à rayons (SA) porteuse, **caractérisée par** une caractéristique à forte symétrie de la structure à rayons (SA) constituée de plusieurs rayons radiaux (RAS) de type nervure avec un rapport d'aspect largeur-profondeur élevé et de plusieurs rayons annulaires (RIS) de type nervure concentriques, tous les rayons radiaux n'allant pas jusqu'à l'axe de moyeu, mais certains rayons radiaux (RAS) s'étendant chacun seulement sur un tiers du corps de jante (FB) à partir de la base de jante (FB) et se terminant sur un rayon annulaire (RIS).

2. Jante en alliage léger (LF) selon la revendication 1,
**caractérisée par** un rapport d'aspect plus faible des rayons annulaires (RIS) comparé au rapport d'aspect des rayons radiaux (RAS), les rayons annulaires (RIS) étant agencés en affleurement ou presque en affleurement avec les rayons radiaux (RAS) sur le côté avant de la jante.

3. Jante en alliage léger (LF) selon la revendication 1 ou 2, **caractérisée par** 16 rayons radiaux (RAS) et 6 rayons annulaires (RIS), un rayon radial (RAS) sur deux n'étant agencé que jusqu'au second rayon annulaire (RIS) à partir de la base de jante (FB).

4. Jante en alliage léger (LF) selon l'une quelconque des revendications 1 à 3, **caractérisée par** des arrondis (AB) entre les rayons radiaux (RAS) sur le côté de la base de jante (FB).

5. Jante en alliage léger (LF) selon l'une quelconque des revendications 1 à 4, **caractérisée par** une plaque circulaire (KP) concentrique dans la zone de la fixation d'essieu du corps de jante (FK) dans lequel les rayons radiaux (RAS) se terminent.

6. Jante en alliage léger (LF) selon l'une quelconque des revendications 1 à 5, **caractérisée par** une structure à base d'un matériau plastique.

7. Jante en alliage léger (LF) selon la revendication 6, **caractérisée par** une structure à base d'un plastique renforcé de fibre présentant des propriétés de matériau anisotrope.
